# EUROPEAN PATENT APPLICATION

(11) **EP 2 846 572 A1**
(43) Date of publication of application: **11.03.2015**
(21) Application number: 13803657.9
(22) Date of filing: 25.07.2013
(51) Int. Cl.: H04W 16/18

(54) **DATA TRANSMISSION METHOD AND SYSTEM**

(30) Priority: 25.07.2012 CN 201210259498
(71) Applicant: ZTE Corporation, Shenzhen, Guangdong 518057 (CN)
(72) Inventor: FENG, Yongli, Shenzhen Guangdong 518057 (CN); TIAN, Boliang, Shenzhen Guangdong 518057 (CN)
(74) Representative: Garratt, Peter Douglas
(86) International application number: PCT/CN2013/080066
(87) International publication number: WO 2013/185688

(57) **Abstract**

A data transmission method and system are provided. A power line communication (PLC) transmission module or device is added at a base station side, a PLC network bridge and exchange module or device is added at a core network side, and the PLC communication module or device is connected with the PLC network bridge and the exchange module or device through a mains supply network. The method includes: the PLC communication module or device obtaining data to be transmitted by a base station to the core network side; and the PLC communication module or device transmitting the data to the PLC network bridge and the exchange module or device of the core network side through the mains supply network. The embodiments of the present invention perform the access entity remoting through the PLC communication mode of the mains supply network, and solve the problem that the construction cost of the existing scheme is high and that the construction is complicated caused by the requirement of setting up the optical cables or network cables alone in addition to the mains supply network.

## Description

### Technical Field

The present invention relates to the mobile communication field, and in particular, to a data transmission method and system.

### Background of the Related Art

The mobile communication base station is divided into a macro station and a micro station; the coverage of the macro station is relatively large, which occupies the main position of the whole cellular mobile communication, while, with the development of the communication technology and the characteristic of the urban construction, the blind compensation of the indoor micro base station becomes a main component of the whole communication system as well.

The remoting of the access entity, such as, the traditional base station and the core network, etc., generally adopts the optical remoting, the Ethernet electric interface (network cable) remoting, or the E1/T1 transmission cable remoting, while the common characteristics are all that no matter the optical cable, the E1/T1 transmission cable or the network cable need to be set up specially, and there is a quite high construction cost.

### Content of the Invention

The embodiment of the present invention provides a data transmission method and system, and solves the problem that the construction cost of the existing scheme of the base station remoting is high and of the complicated construction caused by the requirement of setting up the optical cables or network cables alone in addition to the mains supply network.

The embodiment of the present invention provides a data transmission method, comprising:
adding a power line communication (PLC) transmission module or device at a base station side, adding a PLC network bridge and exchange module or device at a core network side, wherein, the PLC communication module or device is connected with the PLC network bridge and exchange module or device through a mains supply network; and the method comprises:
   the PLC communication module or device obtaining data to be transmitted by a base station to the core network side; and
   the PLC communication module or device transmitting the data to the PLC network bridge and exchange module or device of the core network side through the mains supply network.

Alternatively, the PLC communication module or device transmits the data to the PLC network bridge and exchange module or device of the core network side through the mains supply network, comprising:
the PLC communication module or device transmits the data with a format of Ethernet data to the PLC network bridge and exchange module or device of the core network side through the mains supply network.

Alternatively, after the step of the PLC communication module or device transmitting the data to the PLC network bridge and exchange module or device of the core network side through the mains supply network, it further comprises:
the PLC network bridge and exchange module or device transmitting data received through the mains supply network to an access entity of the core network side.

The embodiment of the present invention further provides a data transmission method, wherein, a power line communication (PLC) transmission module or device is added at a base station side, a PLC network bridge and exchange module or device is added at a core network side, and the PLC communication module or device is connected with the PLC network bridge and exchange module or device through a mains supply network; and the method comprises:
the PLC network bridge and exchange module or device obtaining data to be transmitted by the core network side to a base station; and
the PLC network bridge and exchange module or device transmitting the data to the PLC communication module or device through the mains supply network.

Alternatively, the PLC network bridge and exchange module or device transmits the data to the PLC communication module or device through the mains supply network, comprising:
the PLC network bridge and exchange module or device transmits the data with a format of Ethernet data to the PLC communication module or device through the mains supply network.

Alternatively, after the step of the PLC network bridge and exchange module or device transmitting the data to the PLC communication module or device through the mains supply network, it further comprises:
the PLC communication module or device transmitting data received by the PLC network bridge and exchange module or device and received through the mains supply network to the base station.

The embodiment of the present invention further provides a data transmission system, comprising: a power line communication (PLC) communication module located at a base station side and a PLC network and exchange module located at a core network side, wherein, the PLC communication module is connected with the PLC network bridge and exchange module through a mains supply network; and
the PLC communication module is configured to obtain data to be transmitted by the base station to an access entity of the core network side, and transmit the data to the PLC network bridge and exchange module through the mains supply network.

Alternatively, the PLC network bridge and exchange module is further configured to obtain the data to be transmitted by the access entity of the core network side to the base station, and transmit the data to the PLC communication module through the mains supply network; and
the PLC communication module is further configured to transmit the data received through the mains supply network and transmitted by the PLC network bridge and exchange module to the base station.

Alternatively, the PLC communication module is integrated as a function module inside of the base station, and the base station is a micro base station (MICRO) or a pico base station (PICO) or a home base station (FEMTO) or a macro base station (MACRO).

Alternatively, the PLC network bridge and exchange module is integrated as a function module inside of the access entity of the core network side, and the access entity of the core network side is a core network or a wireless network controller or a mobile switching center or a cascade-connected base station in a mobile cellular system.

The embodiment of the present invention further provides a data transmission system, comprising: a power line communication (PLC) communication module located at a base station side and a PLC network and exchange device located at a core network side, wherein, the PLC communication module is connected with the PLC network bridge and exchange device through a mains supply network; and
the PLC communication module is configured to obtain data to be transmitted by the base station to an access entity of the core network side, and transmit the data to the PLC network bridge and exchange device through the mains supply network.

Alternatively, the PLC network bridge and exchange device is further configured to obtain the data to be transmitted by the access entity of the core network side to the base station, and transmit the data to the PLC communication module through the mains supply network; and
the PLC communication module is further configured to transmit the data received through the mains supply network and transmitted by the PLC network bridge and exchange device to the base station.

Alternatively, the PLC communication module is integrated as a function module inside of the base station, and the base station is a MICRO or a PICO or a FEMTO or a MACRO.

Alternatively, the PLC network bridge and exchange device is connected with the access entity of the core network side, and the access entity of the core network side is a core network or a wireless network controller or a mobile switching center or a cascade-connected base station in a mobile cellular system.

The embodiment of the present invention further provides a data transmission system, comprising: a power line communication (PLC) communication device located at a base station side and a PLC network and exchange module located at a core network side, wherein, the PLC communication device is connected with the PLC network bridge and exchange module through a mains supply network; and
the PLC communication device is configured to obtain data to be transmitted by the base station to an access entity of the core network side, and transmit the data to the PLC network bridge and exchange module through the mains supply network.

Alternatively, the PLC network bridge and exchange module is further configured to obtain the data to be transmitted by the access entity of the core network side to the base station, and transmit the data to the PLC communication device through the mains supply network; and
the PLC communication device is further configured to transmit the data received through the mains supply network and transmitted by the PLC network bridge and exchange module to the base station.

Alternatively, the PLC communication device is connected with the base station, and the base station is a MICRO or a PICO or a FEMTO or a MACRO.

Alternatively, the PLC network bridge and exchange module is integrated as a function module inside of the access entity of the core network side, and the access entity of the core network side is a core network or a wireless network controller or a mobile switching center or a cascade-connected base station in a mobile cellular system.

The embodiment of the present invention further provides a data transmission system, comprising: a power line communication (PLC) communication device located at a base station side and a PLC network and exchange device located at a core network side, wherein, the PLC communication device is connected with the PLC network bridge and exchange device through a mains supply network; and
the PLC communication device is configured to obtain data to be transmitted by the base station to an access entity of the core network side, and transmit the data to the PLC network bridge and exchange device through the mains supply network.

Alternatively, the PLC network bridge and exchange device is further configured to obtain the data to be transmitted by the access entity of the core network side to the base station, and transmit the data to the PLC communication device through the mains supply network; and
the PLC communication device is further configured to transmit the data received through the mains supply network and transmitted by the PLC network bridge and exchange device to the base station.

Alternatively, the PLC communication device is connected with the base station, and the base station is a MICRO or a PICO or a FEMTO or a MACRO.

Alternatively, the PLC network bridge and exchange device is connected with the access entity of the core network side, and the access entity of the core network side is a core network or a wireless network controller or a mobile switching center or a cascade-connected base station in a mobile cellular system.

The embodiments of the present invention provide a data transmission method and system, wherein, the PLC transmission module or device is added at the base station side, the PLC network bridge and exchange module or device is added at the core network side, and the PLC communication module or device is connected with the PLC network bridge and exchange module or device through the mains supply network; the PLC communication module or device obtains the data to be transmitted by the base station to the core network side; and then the PLC communication module or device transmits the data to the PLC network bridge and exchange module or device of the core network side through the mains supply network. Conversely, the PLC network bridge and exchange module or device obtains the data to be transmitted by the access entity of the core network side to the base station; and the PLC network bridge and exchange module or device transmits the data to the PLC communication module or device of the base station side through the mains supply network; and the PLC communication module or device transmits the received data to the base station device. It realizes the access entity remoting performed through the PLC communication mode of the mains supply network, and solves the problem that the construction cost of the existing scheme is high and that the construction is complicated caused by the requirement of setting up the optical cables or network cables alone in addition to the mains supply network.

### Brief Description of Drawings

FIG. 1 is a structure diagram of a data transmission system provided by embodiment one of the present invention;
FIG. 2 is a structure diagram of a data transmission system provided by embodiment two of the present invention;
FIG. 3 is a structure diagram of a data transmission system provided by embodiment three of the present invention;
FIG. 4 is a structure diagram of a data transmission system provided by embodiment four of the present invention;
FIG. 5 is a flow chart of a data transmission method provided by embodiment five of the present invention;
FIG. 6 is a flow chart of another data transmission method provided by embodiment five of the present invention.

### Preferred Embodiments of the Present Invention

The remoting of the access entity, such as, the traditional base station and the core network, etc., generally adopts the optical remoting, the Ethernet electric interface (network cable) remoting, or the E1/T1 transmission cable remoting, while the common characteristics are that no matter the optical cable, the E1/T1 transmission cable or the network cable, all need to be set up specially, and there is a quite high construction cost.

In order to solve the above-mentioned problem, the embodiments of the present invention provide a data transmission method and system, based on the communication mode of the Power Line Communication (PLC), which realize remoting the entity through transmitting the data through the mains supply network. The embodiment of the present invention is described in detail with reference to the accompanying drawings hereinafter. It should be illustrated that, in the case of not conflicting, the embodiments in the present application and features in these embodiments can be combined with each other.

The embodiment one of the present invention is described at firstly by combining with the accompanying drawings.

The power line communication (PLC) technology is a technology which transmits the high bandwidth digital signal with the help of the power line. By utilizing the frequency band of 1.0MHz- 30.0MHz, and adopting the orthogonal frequency-division multiplexing (OFDM) digital modulation technology, it can reach the transmission bandwidth of more than one hundred mega; and one more favorable point is that the technology uses the existing indoor power transmission network, and does not need to be set up alone; and it is more convenient compared to other transmission carriers. The PLC communication module or device and the PLC network bridge and network exchange device utilizing the PLC technology are already very ripe.

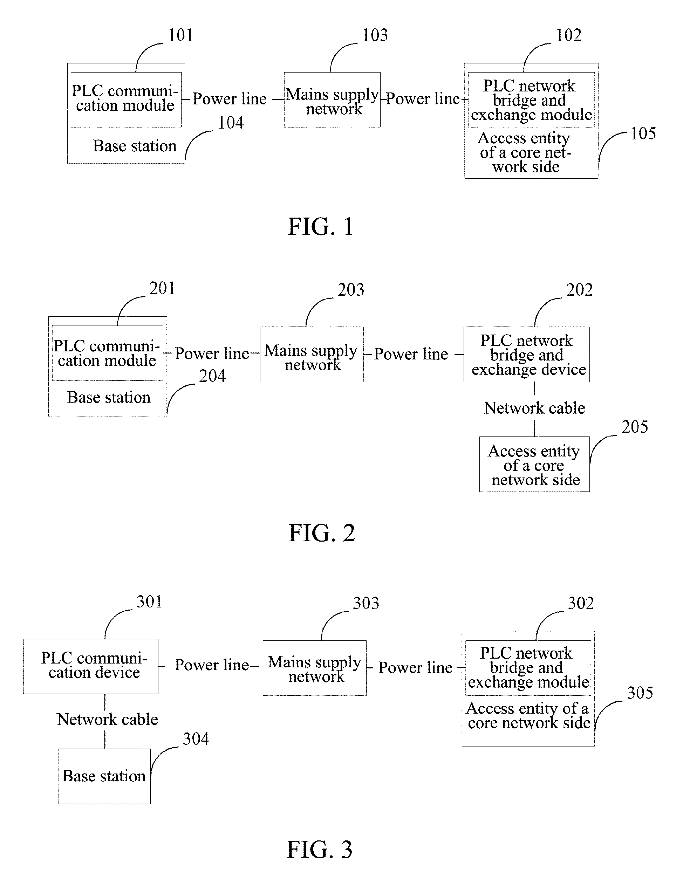

The embodiment one of the present invention provides a data transmission system, and the system structure is shown in FIG. 1, including:
a power line communication (PLC) communication module 101 located at a base station side and a PLC network and exchange module 102 located at a core network side, wherein, the PLC communication module 101 is connected with the PLC network bridge and exchange module 102 through a mains supply network 103; and
the PLC communication module 101 is configured to obtain data to be transmitted by the base station 104 to an access entity of the core network side 105, and transmit the data to the PLC network bridge and exchange module 102 through the mains supply network 103.

Preferable, the PLC network bridge and exchange module 102 is further configured to obtain the data to be transmitted by the access entity of the core network side 105 to the base station 104, and transmit the data to the PLC communication module 101 through the mains supply network 103; and
the PLC communication module 101 is further configured to transmit the data received through the mains supply network 103 and transmitted by the PLC network bridge and exchange module 102 to the base station 104.

Preferable, the PLC communication module 101 is integrated as a function module inside of the base station 104, and the base station 104 is a micro base station (MICRO) or a pico base station (PICO) or a home base station (FEMTO) or a macro base station (MACRO).

Preferable, the PLC network bridge and exchange module 102 is integrated as a function module inside of the access entity 105 of the core network side, and the access entity 105 of the core network side is a core network or a wireless network controller or a mobile switching center or a cascade-connected base station in a mobile cellular system.

The base station 104 keeps the format of the Ethernet data unchanged when transmitting the data to the core network, but transmits the data to the PLC communication module 101 of the base station side first, and then the PLC communication module 101 transmits to the PLC network bridge and exchange module 102 of the core network side through the mains supply network 103, and then the PLC network bridge and exchange module 102 transmits the data to the access entity 105 of the core network side. Conversely, when the access entity 105 of the core network side transmits the data to the base station 104, the access entity 105 of the core network side also keeps the format of the Ethernet data unchanged, and transmits the data to the PLC network bridge and exchange module 102 of the core network side first, and then the PLC network bridge and exchange module 102 of the core network side transmits the data to the PLC communication module 101 of the base station side through the mains supply network 103, and then the PLC communication module or device 101 integrated inside the base station 104 transmits the data to a corresponding receiving module inside the base station 104.

Hereinafter, the embodiment two of the present invention is explained by combining with the accompanying drawings.

The embodiment of the present invention provides a data transmission system, and its structure is shown in FIG. 2, including: a power line communication (PLC) communication module 201 located at a base station side and a PLC network and exchange device 202 located at a core network side, wherein, the PLC communication module 201 is connected with the PLC network bridge and exchange device 202 through a mains supply network 203; and
the PLC communication module 201 is configured to obtain data to be transmitted by the base station 204 to an access entity 205 of the core network side, and transmit the data to the PLC network bridge and exchange device 202 through the mains supply network 203.

Preferably, the PLC network bridge and exchange device 202 is further configured to obtain the data to be transmitted by the access entity 205 of the core network side to the base station 201, and transmit the data to the PLC communication module 201 through the mains supply network 203; and
the PLC communication module 201 is further configured to transmit the data received through the mains supply network 203 and transmitted by the PLC network bridge and exchange device 202 to the base station 204.

Preferably, the PLC communication module 201 is integrated as a function module inside of the base station 204, and the base station 204 is a MICRO or a PICO or a FEMTO or a MACRO.

Preferably, the PLC network bridge and exchange device is connected with the access entity of the core network side, and the access entity of the core network side is a core network or a wireless network controller or a mobile switching center or a cascade-connected base station in a mobile cellular system.

The base station 204 keeps the format of the Ethernet data unchanged when transmitting the data to the core network, but transmits the data to the PLC communication module 201 of the base station side first, and then the PLC communication module 201 transmits to the PLC network bridge and exchange device 202 of the core network side through the mains supply network 203, and then the PLC network bridge and exchange device 202 transmits the data to the access entity 205 of the core network side. Conversely, when the access entity 205 of the core network side transmits the data to the base station 204, the access entity 205 of the core network side also keeps the format of the Ethernet data unchanged, and transmits the data to the PLC network bridge and exchange device 202 of the core network side first, and then the PLC network bridge and exchange device 202 of the core network side transmits the data to the PLC communication module 201 of the base station side through the mains supply network 203, and then the PLC communication module 201 integrated inside the base station 204 transmits the data to a corresponding receiving module inside the base station 204.

Hereinafter, the embodiment three of the present invention is explained by combining with the accompanying drawings.

The embodiment of the present invention provides a data transmission system, and its structure is shown in FIG. 3, including: a power line communication (PLC) communication device 301 located at a base station side and a PLC network and exchange module 302 located at a core network side, wherein, the PLC communication device 301 is connected with the PLC network bridge and exchange module 302 through a mains supply network 303; and
the PLC communication device 301 is configured to obtain data to be transmitted by the base station 304 to an access entity 305 of the core network side, and transmit the data to the PLC network bridge and exchange module 302 through the mains supply network 303.

Preferably, the PLC network bridge and exchange module 302 is further configured to obtain the data to be transmitted by the access entity 305 of the core network side to the base station 304, and transmit the data to the PLC communication device 301 through the mains supply network 303; and
the PLC communication device 301 is further configured to transmit the data received through the mains supply network 303 and transmitted by the PLC network bridge and exchange module 302 to the base station 304.

Preferably, the PLC communication device 301 is connected with the base station 304, and the base station 304 is a MICRO or a PICO or a FEMTO or a MACRO.

Preferably, the PLC network bridge and exchange module 302 is integrated as a function module inside of the access entity 305 of the core network side, and the access entity 305 of the core network side is a core network or a wireless network controller or a mobile switching center or a cascade-connected base station in a mobile cellular system.

The base station 304 keeps the format of the Ethernet data unchanged when transmitting the data to the core network, but transmits the data to the PLC communication module 301 of the base station side first, and then the PLC communication module 301 transmits to the PLC network bridge and exchange module 302 of the core network side through the mains supply network 303, and then the PLC network bridge and exchange module 302 transmits the data to the access entity 305 of the core network side. Conversely, when the access entity 305 of the core network side transmits the data to the base station 304, the access entity 305 of the core network side also keeps the format of the Ethernet data unchanged, and transmits the data to the PLC network bridge and exchange module 302 of the core network side first, and then the PLC network bridge and exchange module 302 of the core network side transmits the data to the PLC communication module 301 of the base station side through the mains supply network 303, and then the PLC communication device 301 separately set outside the base station 304 transmits the data to the base station 304.

Hereinafter, the embodiment four of the present invention is explained by combining with the accompanying drawings.

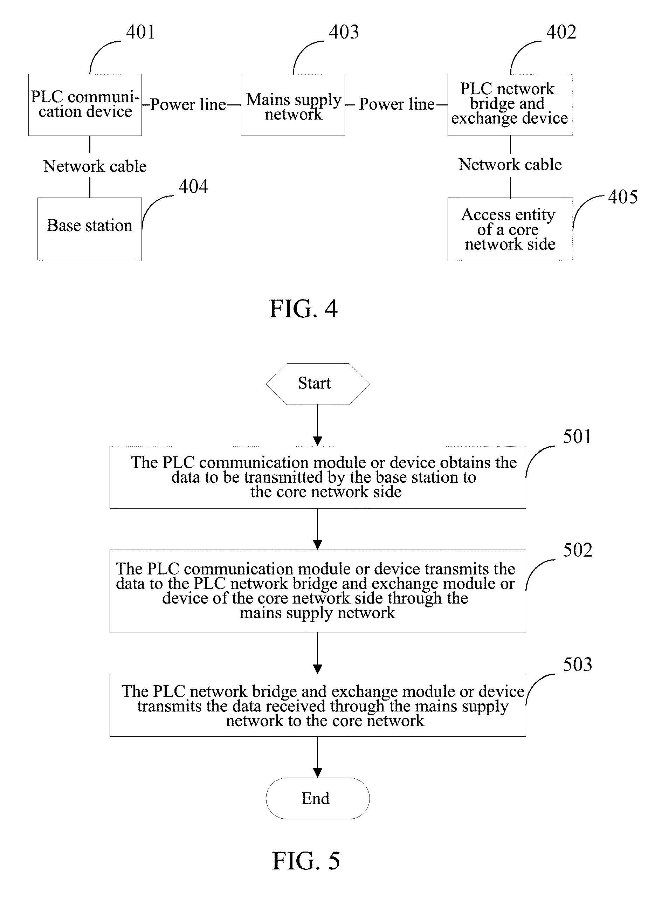

The embodiment of the present invention provides a data transmission system, and its structure is shown in FIG. 4, including: a power line communication (PLC) communication device 401 located at a base station side and a PLC network and exchange device 402 located at a core network side, wherein, the PLC communication device 401 is connected with the PLC network bridge and exchange device 402 through a mains supply network 403; and
the PLC communication device 401 is configured to obtain data to be transmitted by the base station 404 to an access entity 405 of the core network side, and transmit the data to the PLC network bridge and exchange device 402 through the mains supply network 403.

Preferably, the PLC network bridge and exchange device 402 is further configured to obtain the data to be transmitted by the access entity 405 of the core network side to the base station 404, and transmit the data to the PLC communication device 401 through the mains supply network 403; and
the PLC communication device 401 is further configured to transmit the data received through the mains supply network 402 and transmitted by the PLC network bridge and exchange device 402 to the base station 404.

Preferably, the PLC communication device 401 is connected with the base station 404, and the base station 404 is a MICRO or a PICO or a FEMTO or a MACRO.

Preferably, the PLC network bridge and exchange device 402 is connected with the access entity 405 of the core network side, and the access entity 405 of the core network side is a core network or a wireless network controller or a mobile switching center or a cascade-connected base station in a mobile cellular system.

The base station 404 keeps the format of the Ethernet data unchanged when transmitting the data to the core network, but transmits the data to the PLC communication module 401 of the base station side first, and then the PLC communication module 401 transmits to the PLC network bridge and exchange device 402 of the core network side through the mains supply network 403, and then the PLC network bridge and exchange device 402 transmits the data to the access entity 405 of the core network side. Conversely, when the access entity 405 of the core network side transmits the data to the base station 404, the access entity 405 of the core network side also keeps the format of the Ethernet data unchanged, and transmits the data to the PLC network bridge and exchange device 402 of the core network side first, and then the PLC network bridge and exchange device 402 of the core network side transmits the data to the PLC communication module 401 of the base station side through the mains supply network 403, and then the PLC communication device 401 separately set outside the base station 404 transmits the data to the base station 404.

Hereinafter, the embodiment five of the present invention is explained by combining with the accompanying drawings.

The embodiment of the present invention provides a data transmission method, taking any data transmission system as shown in FIG. 1 to FIG. 4 as the application scene, and combining with FIG. 5, the procedure of using the method to finish transmitting the data to the access network by the base station is explained.

In step 501, the PLC communication module or device obtains the data to be transmitted by the base station to the core network side.

In the present step, the PLC communication module or device obtains the data to be transmitted by the base station to the core network side, and the data are with the format of the Ethernet data.

In step 502, the PLC communication module or device transmits the data to the PLC network bridge and exchange module or device of the core network side through the mains supply network.

In the present step, the PLC communication module or device transmits the data through the mains supply network, and it can communicate by adopting the PLC mode in the mains supply network.

In step 503, the PLC network bridge and exchange module or device transmits the data received through the mains supply network to the core network.

In the present step, after receiving the data transmitted from the PLC communication module or device, the PLC network bridge and exchange module or device transmits the data to the core network, and specifically transmits to an access entity of the core network side.

Till now, the procedure of the base station transmitting the data to the core network side ends.

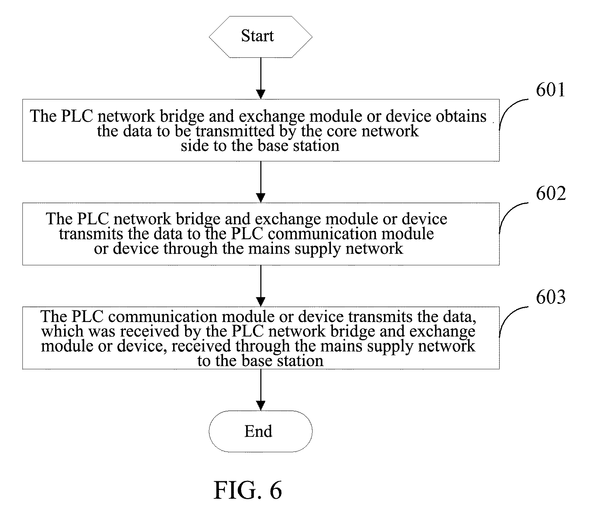

Combining with FIG. 6 hereinafter, the procedure of using the data transmission method provided by the embodiment of the present invention to finish transmitting the data from the core network side to the base station is explained.

In step 601, the PLC network bridge and exchange module or device obtains the data to be transmitted by the core network side to the base station.

In the present step, the PLC network bridge and exchange module or device obtains the data to be transmitted by the base station to the core network side, and the data are with the format of the Ethernet data.

In step 602, the PLC network bridge and exchange module or device transmits the data to the PLC communication module or device through the mains supply network.

In step 603, the PLC communication module or device transmits the data received through the mains supply network and received by the PLC network bridge and exchange module or device to the base station.

Till now, the procedure of the core network side transmitting the data to the base station ends.

The embodiments of the present invention provide a data transmission method and system, wherein, the PLC transmission module or device is added at the base station side, the PLC network bridge and exchange module or device is added at the core network side, and the PLC communication module or device is connected with the PLC network bridge and exchange module or device through the mains supply network; the PLC communication module or device obtains the data to be transmitted by the base station to the core network side; and then the PLC communication module or device transmits the data to the PLC network bridge and exchange module or device of the core network side through the mains supply network, which realizes the access entity remoting performed through the PLC communication mode of the mains supply network, and solves the problem that the construction cost of the existing access entity remoting is high.

The power line communication (PLC) technology is a technology which transmits the high bandwidth digital signal with the help of the electric line. By utilizing the frequency band of 1.0MHz- 30.0MHz, and adopting the orthogonal frequency-division multiplexing (OFDM) digital modulation technology, it can reach the transmission bandwidth of more than one hundred mega; and one more favorable point is that the technology is to utilize the existing indoor power transmission network, and does not need to be set up alone. In the embodiment of the present invention, between the access entity of the core network side and the base station, by utilizing their own power supply cables, the existing wired communication by adopting the special cable transmission is replaced by the power line communication constituted by the PLC network bridge and exchange module or device integrated inside or set outside the access entity and the PLC communication module or device integrated inside or set outside the base station by adopting the PLC mode, thus avoiding the construction complexity of the networking wiring; it does not need the optical cable, the E1/T1 transmission cable or the network cable, thus saving the cost of the material; and the networking is flexible and the stationing is convenient.

It can be understood by those skilled in the art that all or part of steps in the above-mentioned embodiment can be fulfilled by the computer program flow, and the computer program flow can be stored in a computer readable storage medium, and the computer program flow is executed on the corresponding hardware platform (such as a system, a device, an apparatus, a component, etc.), and includes one of the steps of the method embodiment or its combination when being executed.

Alternatively, all or part of the steps in the above-mentioned embodiments also can be implemented by the integrated circuits. Those steps can be made into integrated circuit modules one after another respectively, or multiple modules or steps therein are made into a single integrated circuit module for implementation. This way, the present invention is not limit to any specific combination of the hardware and software.

Each device / function module / function unit in the above-mentioned embodiment can be implemented by the universal calculating apparatus, and they can be integrated in a single calculating apparatus, or distributed in the network made up by a plurality of calculating apparatus.

Each device / function module / function unit in the above-mentioned embodiment can be stored in a computer readable storage medium when it is implemented in the form of the software function module and is sold or used as an individual product. The above-mentioned computer readable storage medium can be a read only memory, a magnetic disk or an optical disk, etc.

Those modifications and replacements which can be thought out easily by those skilled in the art in the technical scope disclosed by the present invention should be embodied in the protection scope of the present invention. Therefore, the protection scope of the present invention should be based on the protection scope described by the claims.

### Industrial Applicability

The embodiments of the present invention provide a data transmission method and system, wherein, the PLC transmission module or device is added at the base station side, the PLC network bridge and exchange module or device is added at the core network side, and the PLC communication module or device is connected with the PLC network bridge and exchange module or device through the mains supply network; the PLC communication module or device obtains the data to be transmitted by the base station to the core network side; and then the PLC communication module or device transmits the data to the PLC network bridge and exchange module or device of the core network side through the mains supply network. Conversely, the PLC network bridge and exchange module or device obtains the data to be transmitted by the access entity of the core network side to the base station; and the PLC network bridge and exchange module or device transmits the data to the PLC communication module or device of the base station side through the mains supply network; and the PLC communication module or device transmits the received data to the base station device. It realizes the access entity remoting performed through the PLC communication mode of the mains supply network, and solves the problem that the construction cost of the existing scheme is high and that the construction is complicated caused by by the requirement of setting up the optical cables or network cables alone in addition to the mains supply network.

## Claims

1. A data transmission method, wherein, a power line communication (PLC) transmission module or device is added at a base station side, a PLC network bridge and exchange module or device is added at a core network side, and the PLC communication module or device is connected with the PLC network bridge and exchange module or device through a mains supply network; and the method comprises:
the PLC communication module or device obtaining data to be transmitted by a base station to the core network side; and
the PLC communication module or device transmitting the data to the PLC network bridge and exchange module or device of the core network side through the mains supply network.

2. The data transmission method according to claim 1, wherein, the PLC communication module or device transmitting the data to the PLC network bridge and exchange module or device of the core network side through the mains supply network comprises:
the PLC communication module or device transmitting the data with a format of Ethernet data to the PLC network bridge and exchange module or device of the core network side through the mains supply network.

3. The data transmission method according to claim 1, further comprising:
after the step of the PLC communication module or device transmitting the data to the PLC network bridge and exchange module or device of the core network side through the mains supply network, the PLC network bridge and exchange module or device transmitting the data received through the mains supply network to an access entity of the core network side.

4. A data transmission method, wherein, a power line communication (PLC) transmission module or device is added at a base station side, a PLC network bridge and exchange module or device is added at a core network side, and the PLC communication module or device is connected with the PLC network bridge and exchange module or device through a mains supply network; and the method comprises:
the PLC network bridge and exchange module or device obtaining data to be transmitted by the core network side to a base station; and
the PLC network bridge and exchange module or device transmitting the data to the PLC communication module or device through the mains supply network.

5. The data transmission method according to claim 4, wherein, the PLC network bridge and exchange module or device transmitting the data to the PLC communication module or device through the mains supply network comprises:
the PLC network bridge and exchange module or device transmitting the data with a format of Ethernet data to the PLC communication module or device through the mains supply network.

6. The data transmission method according to claim 4, further comprising:
after the step of the PLC network bridge and exchange module or device transmitting the data to the PLC communication module or device through the mains supply network, the PLC communication module or device transmitting the data received by the PLC network bridge and exchange module or device and received through the mains supply network to the base station.

7. A data transmission system, comprising: a power line communication (PLC) communication module located at a base station side and a PLC network and exchange module located at a core network side, wherein, the PLC communication module is connected with the PLC network bridge and exchange module through a mains supply network; and
the PLC communication module is configured to obtain data to be transmitted by the base station to an access entity of the core network side, and transmit the data to the PLC network bridge and exchange module through the mains supply network.

8. The data transmission system according to claim 7, wherein,
the PLC network bridge and exchange module is further configured to obtain the data to be transmitted by the access entity of the core network side to the base station, and transmit the data to the PLC communication module through the mains supply network; and
the PLC communication module is further configured to transmit the data received through the mains supply network and transmitted by the PLC network bridge and exchange module to the base station.

9. The data transmission system according to claim 7, wherein, the PLC communication module is integrated as a function module inside of the base station, and the base station is a micro base station (MICRO) or a pico base station (PICO) or a home base station (FEMTO) or a macro base station (MACRO).

10. The data transmission system according to claim 7, wherein, the PLC network bridge and exchange module is integrated as a function module inside of the access entity of the core network side, and the access entity of the core network side is a core network or a wireless network controller or a mobile switching center or a cascade-connected base station in a mobile cellular system.

11. A data transmission system, comprising: a power line communication (PLC) communication module located at a base station side and a PLC network and exchange device located at a core network side, wherein, the PLC communication module is connected with the PLC network bridge and exchange device through a mains supply network; and
the PLC communication module is configured to obtain data to be transmitted by the base station to an access entity of the core network side, and transmit the data to the PLC network bridge and exchange device through the mains supply network.

12. The data transmission system according to claim 11, wherein,
the PLC network bridge and exchange device is further configured to obtain the data to be transmitted by the access entity of the core network side to the base station, and transmit the data to the PLC communication module through the mains supply network; and
the PLC communication module is further configured to transmit the data received through the mains supply network and transmitted by the PLC network bridge and exchange device to the base station.

13. The data transmission system according to claim 11, wherein, the PLC communication module is integrated as a function module inside of the base station, and the base station is a micro base station (MICRO) or a pico base station (PICO) or a home base station (FEMTO) or a macro base station (MACRO).

14. The data transmission system according to claim 11, wherein, the PLC network bridge and exchange device is connected with the access entity of the core network side, and the access entity of the core network side is a core network or a wireless network controller or a mobile switching center or a cascade-connected base station in a mobile cellular system.

15. A data transmission system, comprising: a power line communication (PLC) communication device located at a base station side and a PLC network and exchange module located at a core network side, wherein, the PLC communication device is connected with the PLC network bridge and exchange module through a mains supply network; and
the PLC communication device is configured to obtain data to be transmitted by the base station to an access entity of the core network side, and transmit the data to the PLC network bridge and exchange module through the mains supply network.

16. The data transmission system according to claim 15, wherein,
the PLC network bridge and exchange module is further configured to obtain the data to be transmitted by the access entity of the core network side to the base station, and transmit the data to the PLC communication device through the mains supply network; and
the PLC communication device is further configured to transmit the data received through the mains supply network and transmitted by the PLC network bridge and exchange module to the base station.

17. The data transmission system according to claim 15, wherein, the PLC communication device is connected with the base station, and the base station is a micro base station (MICRO) or a pico base station (PICO) or a home base station (FEMTO) or a macro base station (MACRO).

18. The data transmission system according to claim 15, wherein, the PLC network bridge and exchange module is integrated as a function module inside of the access entity of the core network side, and the access entity of the core network side is a core network or a wireless network controller or a mobile switching center or a cascade-connected base station in a mobile cellular system.

19. A data transmission system, comprising: a power line communication (PLC) communication device located at a base station side and a PLC network and exchange device located at a core network side, wherein, the PLC communication device is connected with the PLC network bridge and exchange device through a mains supply network; and
the PLC communication device is configured to obtain data to be transmitted by the base station to an access entity of the core network side, and transmit the data to the PLC network bridge and exchange device through the mains supply network.

20. The data transmission system according to claim 19, wherein,
the PLC network bridge and exchange device is further configured to obtain the data to be transmitted by the access entity of the core network side to the base station, and transmit the data to the PLC communication device through the mains supply network; and
the PLC communication device is further configured to transmit the data received through the mains supply network and transmitted by the PLC network bridge and exchange device to the base station.

21. The data transmission system according to claim 19, wherein,
the PLC communication device is connected with the base station, and the base station is a micro base station (MICRO) or a pico base station (PICO) or a home base station (FEMTO) or a macro base station (MACRO).

22. The data transmission system according to claim 19, wherein,
the PLC network bridge and exchange device is connected with the access entity of the core network side, and the access entity of the core network side is a core network or a wireless network controller or a mobile switching center or a cascade-connected base station in a mobile cellular system.
